# EUROPÄISCHE PATENTSCHRIFT

(11) **EP 1 309 828 B1**
(45) Veröffentlichungstag und Bekanntmachung des Hinweises auf die Patenterteilung: **21.12.2005**
(21) Anmeldenummer: 01951868.7
(22) Anmeldetag: 30.07.2001
(51) Int. Cl.: F26B 7/00, F26B 17/04, C02F 11/12

(54) **VERFAHREN ZUM TROCKNEN VON PASTÖSEN MATERIALIEN**
METHOD FOR DRYING PASTE-LIKE MATERIALS
PROCEDE DE SECHAGE DE MATIERES PATEUSES

(30) Priorität: 09.08.2000 DE 10038910
(43) Veröffentlichungstag der Anmeldung: 14.05.2003
(73) Patentinhaber: Innoplana Umwelttechnik AG, 8274 Tägerwilen (CH)
(72) Erfinder: KNOER, Peter, CH-8280 Kreuzlingen (CH); BRAUN, Thomas, 78333 Stockach (DE)
(74) Vertreter: Quehl, Horst Max
(86) Internationale Anmeldenummer: PCT/IB2001/001387
(87) Internationale Veröffentlichungsnummer: WO 2002/012811

(56) Entgegenhaltungen:
- EP-A- 0 356 388
- EP-A- 0 781 741
- WO-A-00/03782
- DE-A- 2 947 746
- US-A- 3 613 564
- US-A- 5 227 073
- US-A- 5 384 969

## Beschreibung

Die Erfindung betrifft ein Verfahren zum Trocknen von pastösen Materialien entsprechend den Merkmalen des Oberbegriffs des Patentanspruchs 1 und eine vorrichtung zur Ansführung des Verfahrens.

Beim Trocknen von pastösen Materialien, wie z.B. von Klärschlamm, liegt die Aufgabenstellung vor, ein Granulat herzustellen, das eine möglichst gleichmässige Granulatgrösse und zur Vermeidung von Staubbildung eine gute Abriebfestigkeit aufweist.

Durch die US-A-4193206 ist ein Verfahren dieser Art bekannt, bei dem das Kompaktieren am Ende des Trocknungsprozesses bei einem Trockenanteil des Materials von mehr als 85 % erfolgt. Da sich ein solches Material durch Düsen nicht extrudieren lasst, wird die Zugabe eines Plastifizierungsmittels vorgeschlagen. Das auf solche Weise kompaktierte Produkt hat jedoch eine ungleichmässige Granulatgrösse, so dass anschliessend noch eine Trennung mit Rückführung von Staub und Zerkleinern von zu gross anfallenden Granulatteilen erforderlich ist. Es soll dabei ein Granulat mit einer Schüttdichte von mehr als 480 kg/m³ (30 lb/ft³) erzielt werden. Eine betreffende Verfahrensanlage ist entsprechend aufwendig, einschliesslich von unterschiedlichen, für das Trockungsverfahren verwendeter Apparaturen sowie des Extruders, der trotz des Einsatzes von Plastifizierungsmitteln ein besonders festes und zähes Material verarbeiten muss.

Durch die EP-B-0781741 ist ein als naheliegendster Stand der Technik betrachtetes Verfahren bekannt. Bei diesem wird ein noch verhältnismässig feuchtes Material mit einem Trockenanteil von 40 bis 60% beim Verlassen eines Dünnschichtverdampfers extrudiert, so dass durch die plötzliche Aenderung der Verfahrensbedingungen ein poröses Produkt mit verfestigter Oberfläche entsteht, dessen vergrösserte spezifische Oberfläche vorteilhaft ist, sowohl für die sich anschliessende weitere Trocknung als auch bei der späteren Verwendung als Düngemittel. Aufgrund der dabei angewandten besonderen Wärmeführung hat dieses Verfahren dank einer relativ aufwendigen Trocknung in einem Dünnschichtverdampfer einen guten Wärmewirkungsgrad. Nachteilig ist jedoch die verhältnismässig aufwändige Verfahrensanlage und die auf ein Schüttgewicht von ca. 500 kg/m³ begrenzte Dichte des Granulats.

Es ist auch ein Verfahren bekannt, bei dem die Trocknung nur in einem Bandtrockner erfolgt. Es hat jedoch den Nachteil, dass das den Bandtrockner verlassende Produkt eine sehr unregelmässige Granülatgrösse und eine geringe Dichte aufweist, entsprechend sehr bröckelig ist und somit eine geringe Abriebfestigkeit hat. Dies führt bei dem anschliessenden Handling, z.B. bei der Förderung zu Silos, bei der Abfüllung in Säcke und bei deren weiteren Transport zu entsprechend grossem Kapazitätsbedarf, verbunden mit dem Problem einer erheblichen Staubentwicklung.

Um diesen Nachteil zu vermeiden ist es weiterhin bekannt, das Trockenprodukt nach Verlassen des Bandtrockners zu pelletieren. Die hierzu geeigneten Vorrichtungen sind jedoch mechanisch aufwendig bzw. teuer, unterliegen hohem Verschleiss und benötigen hohe Antriebsenergie.

Der Erfindung liegt die Aufgabe zugrunde, die genannten Nachteile der bekannten Verfahren zu vermeiden und ein Verfahren zu finden, das mit verhältnismässig geringem apparativen Aufwand und bei geringen Betriebskosten die Herstellung eines hochwertigen Granulats hinsichtlich besonders hoher Dichte und Festigkeit ermöglicht, wie es bisher nur auf besonders aufwändige Weise durch Pelletieren des fertig getrockneten Produktes erreicht werden konnte.

Die Lösung dieser Aufgabe erfolgt erfindungsgemäss aufgrund der Merkmale des Patentanspruchs 1, bzw. der Merkmale des Patentanspruchs 8.

Die Ausführung des Verfahrens in einem gemeinsamen Gehäuse und damit unter gleichen Verfahrensbedingungen vor und nach dem Kompaktieren führen zu einer wesentlichen Vereinfachung der Verfahrensanlage, da hinsichtlich Druck und Temperatur keine getrennte Systeme geschaffen werden müssen. Ausserdem kann die gesamte Trockung kostengünstig mit einem mechanisch einheitlichen Fördersystem, z.B. auf einer Bandförderanlage, mit einem oder mehreren Förderbändern erfolgen.

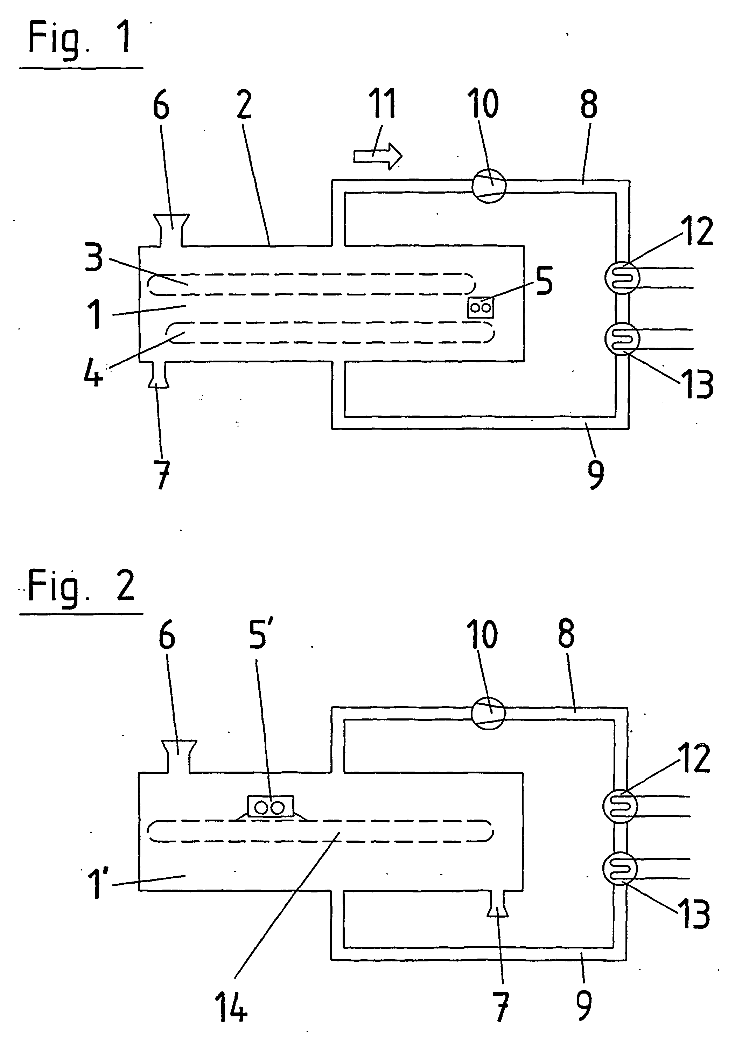

Ausführungsbeispiele von hierzu gezeigten Verfahrensanlagen werden im Folgenden anhand der Zeichnungen näher erläutert. Diese sind in Fig.1 und in Fig.2 schematisch dargestellt.

Die Verfahrensanlage nach Fig.1 hat einen Bandtrockner 1 in dessen Gehäuse 2 eine Fördereinrichtung (3,4) und eine Kompaktiervorrichtung 5 eingeschlossen sind. Die Fördereinrichtung besteht aus zwei übereinander angeordneten, luftdurchlässigen Förderbändern 3,4, und im Uebergangsbereich zwischen beiden ist eine z.B. als Radialextruder ausgeführte Kompaktiervorrichtung 5 vorgesehen. Diese nimmt somit das auf dem ersten Förderband 3 vorgetrocknete Material auf und gibt es in kompaktiertem Zustand auf das zweite Förderband 4 ab, auf dem es fertiggetrocknet wird. Der Einlass 6 am oberen Teil des Trocknergehäuses 2 für fliessfähiges oder dickflüssiges Material und der Auslass 7 am Boden des Trocknergehäuses für streufähiges Fertigprodukt können als Schleuse ausgeführt sein, um ein Entweichen von Gasen des Trockungsprozesses ins Freie zu vermeiden und/oder um die Trockung bei Ueberdruck durchzuführen.

Das zum Trocknen eingesetzte Gas (Luft) wird mittels eines über die Leitungen 8,9 mit dem Bandtrockner 1 verbundenen Gebläses 10 in Richtung des Pfeiles 11 innerhalb eines Kreislaufsystems zirkuliert. Die vom Gas aufgenommene Feuchtigkeit wird in dem Kondensator 12 des Kreislaufsystems abgeschieden. In dem nachfolgenden Wärmetauscher 13 wird das Gas anschliessend wieder erhitzt.

Die Verfahrensanlage nach Fig.2 zeigt eine vereinfachte Ausführungsform, indem in dem Bandtrockner 1' nur ein Förderband 14 vorgesehen ist. Um auch hier in einer Zwischenstufe der Trocknung das Material zu kompaktieren, ist die Kompaktiervorrichtung 5' z.B. in einem mittleren Bereich der Förderstrecke oberhalb des Förderbandes 14 vorgesehen, so dass sie das Material vom Förderband 14 aufnimmt und anschliessend auf dasselbe Band wieder abgibt. Die Position der Kompaktiervorrichtung 5' entlang der Förderstrecke des Förderbandes 14 wird so gewählt, dass das von ihr aufgenommene Material bereits so weit entfeuchtet ist, dass beim Kompaktieren ein stabiles Material, vorzugsweise in Granulatform, gebildet wird, indem es seine Dichte zum weiteren Trocknen beibehält.

Der für das Kompaktieren erforderliche Trocknungsgrad ist von der Art des Materials abhängig und muss folglich jeweils ermittelt werden. Es hat sich überraschend gezeigt, dass bereits mit einem Feuchtigkeitsgrad im Bereich von 60 bis 80 % ein solches Kompaktieren möglich ist, ohne dass die somit gebildeten Granulatteile zusammenklumpen und ohne dass die intensive Kompaktierung beim anschliessenden Weitertrocknen verloren geht. Somit erfolgt das Kompaktieren auf besonders wirtschaftliche Weise mit geringem Kraft- und Energieaufwand, und es können die für eine Pelletiervorrichtung ca. 5-fach höheren Kosten vermieden werden.

Das aufgrund des erfindungsgemässen Verfahrens erzielbare Schüttgewicht des Fertigproduktes liegt bei ca. 700 kg/m³, ohne dass das Kompaktieren im Zustand der Fertigtrocknung und mit Zugabe eines Plastifiziermittels erforderlich ist.

## Patentansprüche

1. Verfahren zum Trocknen von pastösen Materialien, insbesondere von Klärschlamm und dabei Herstellen eines Granulats hoher Dichte durch Vortrocknen, anschliessendes Kompaktieren zu einem Granulat und Fertigtrocknen, **dadurch gekennzeichnet, dass** diese Verfahrensschritte in einem gemeinsamen Gehäuse und damit unter gleichen Verfahrensbedingungen durchgeführt werden, wobei das Kompaktieren, in Abhängigkeit von der Art des Materials, bei einem Trockenanteil von 60 bis 80 % erfolgt, so dass der Grad der Kompaktierung bei anschliessendem Weitertrocknen im Wesentlichen aufrechterhalten bleibt.

2. Verfahren nach Anspruch 1, **dadurch gekennzeichnet, dass** das Trocknen in einem von einem gasförmigen Medium durchströmten Bandtrockner (1) erfolgt, so dass die zum Kompaktieren erforderliche Vorrichtung (5) in dem Gehäuse (2) des Bandtrockners (1) eingeschlossen ist.

3. Verfahren nach Anspruch 2, **dadurch gekennzeichnet; dass** die Kompaktiervorrichtung (5) im Uebergangsbereich von zwei in Förderrichtung aufeinander folgenden Förderbändern (3,4) des Bandtrockners (1) vorgesehen ist.

4. Verfahren nach Anspruch 1 oder 4, **dadurch gekennzeichnet, dass** das Trocknen auf nur einem Förderband (14) des Bandtrockners erfolgt, indem das Material durch die Kompaktiervorrichtung (5) vom Förderband (14) aufgenommen und nach Kompaktierung wieder auf dieses abgegeben wird.

5. Verfahren nach Anspruch 4, **dadurch gekennzeichnet, dass** zur Anpassung des Verfahrens an die Art des zu trocknenden Materials die Kompaktiervorrichtung (5) in Richtung des Förderbandes (14) verstellbar ist.

6. Verfahren nach Anspruch 2, **dadurch gekennzeichnet, dass** das Trocknen auf nur einem Förderband (14) des Bandtrockners erfolgt, indem das Material durch die Kompaktiervorrichtung (5) vom Förderband (14) aufgenommen und nach Kompaktierung wieder auf dieses abgegeben wird.

7. Verfahren nach Anspruch 6, **dadurch gekennzeichnet, dass** zur Anpassung des Verfahrens an die Art des zu trocknenden Materials die Kompaktiervorrichtung (5) in Richtung des Förderbandes (14) verstellbar ist.

8. Vorrichtung zur Ausführung des Verfahrens nach Anspruch 1, **gekennzeichnet durch** ein einen Einlass (6) und einen Auslass (7) aufweisendes Gehäuse (2), in dem eine mindestens ein luftdurchlässiges Förderband (3,4,14) aufweisende Fördereinrichtung und eine in einem Bereich ihrer Förderstrecke angeordnete Kompaktiervorrichtung (5,5') angeordnet sind.

9. Vorrichtung nach Anspruch 8, **dadurch gekennzeichnet, dass** das Gehäuse (2) in einem Leitungen (8,9) aufweisenden Kreislaufsystem angeordnet ist, das ein Gebläse (10), einen Kondensator (12) und einen Erhitzer (13) aufweist.

## Claims

1. Method for drying pasty materials, particularly sewage sludge and thereby production of a high density granulate by pre-drying, subsequent compacting to obtain a granulate and final drying, **characterized in that** the method steps are carried out within a common housing and therefore under identical method conditions, whereby compacting takes place as a function of the nature of the material with a dry fraction of 60 to 80%, so that the degree of compacting during subsequent further drying is substantially maintained.

2. Method according to claim 1, **characterized in that** drying takes place in a belt dryer (1) through which flows a gaseous medium, so that the compactor (5) is enclosed in the housing (2) of the belt dryer (1).

3. Method according to claim 2, **characterized in that** the compactor (5) is provided in the transition area between two conveyor belts (3,4) of the belt dryer (1) succeeding one another in the conveying direction.

4. Method according to claim 1 or 2, **characterized in that** drying takes place on a single conveyor belt (14) of the belt dryer, **in that** the material is received by the compactor (5) from the conveyor belt (14) and is returned thereto after compacting.

5. Method according to claim 4, **characterized in that** for adapting the method to the nature of the material to be dried the compactor (5) is adjustable in the direction of the conveyor belt (14).

6. Method according to claim 2, **characterized in that** drying takes place on a single conveyor belt (14) of the belt dryer, **in that** the material is received by the compactor (5) from the conveyor belt (14) and is returned thereto after compacting.

7. Method according to claim 6, **characterized in that** for adapting the method to the nature of the material to be dried the compactor (5) is adjustable in the direction of the conveyor belt (14).

8. Apparatus for carrying out the method according to claim 1, **characterized in that** a housing (2) provided with an inlet (6) and an outlet (7) encloses a conveyor and a compactor, the conveyor has at least one air-permeable conveyor belt (3,4,14) and the compactor (5,5') is arranged in the area of the of conveyor.

9. Apparatus according to claim 8, **characterized in that** the housing (2) is part of a circuit, comprising a blower (10), a condenser (12) and a heater (13), which are connected to each other by lines (8,9).

## Revendications

1. Procédé pour le séchage de matériaux pâteux, notamment de boue d'épuration et par la même, fabrication d'un granulat à haute densité par pré-séchage, compactage ultérieur sous forme de granulat et séchage complet, **caractérisé en ce que** ces étapes de procédé sont réalisés dans un boîtier commun et donc dans des conditions de procédé identiques ; le compactage se déroulant selon le type de matériau, avec une partie de matériau sec allant de 60 à 80 % pour maintenir essentiellement le degré de compactage lors du séchage ultérieur.

2. Procédé selon la revendication 1, **caractérisé en ce que** le séchage se déroule dans un sécheur à bande (1) traversé par un agent gazeux de manière à ce que le dispositif (5) à compacter soit enfermé dans le boîtier du sécheur à bande (1).

3. Procédé selon la revendication 2, **caractérisé en ce que** le dispositif de compactage (5) est prévu dans la zone de transition entre deux bandes de transport (3,4) du sécheur à bande (1) qui suivent l'un après l'autre.

4. Procédé selon la revendication 1 ou 2, **caractérisé en ce que** le séchage ne se déroule que sur une bande de transport (14) du sécheur à bande, **en ce que** le matériau est réceptionné par le dispositif de compactage (5) par la bande de transport (14) et après le compactage, de nouveau déposé sur ladite bande de transport.

5. Procédé selon la revendication 4, **caractérisé en ce que** le dispositif de compactage (5) peut être déplacé en direction de la bande de transport (14) pour adapter le procédé au type de matériau à sécher.

6. Procédé selon la revendication 2, **caractérisé en ce que** le séchage ne se déroule que sur une bande de transport (14) du sécheur à bande, **en ce que** le matériau est réceptionné par le dispositif de compactage (5) par la bande de transport (14) et après le compactage, de nouveau déposé sur ladite bande de transport.

7. Procédé selon la revendication 6, **caractérisé en ce que** le dispositif de compactage (5) peut être déplacé en direction de la bande de transport (14) pour adapter le procédé au type de matériau à sécher.

8. Dispositif pour la réalisation du procédé selon la revendication 1, **caractérisé par** un boîtier présentant une entrée (6) et une sortie (7), dans lequel on a disposé un dispositif de transport présentant au moins une bande de transport (3, 4, 14) perméable à l'air et un dispositif de compactage (5, 5') disposé dans une zone du trajet de transport du dispositif de transport .

9. Dispositif selon la revendication 8, **caractérisé en ce que** le boîtier (2) est disposé dans un système à circuit présentant des conduites (8, 9), un ventilateur (10), un condensateur (12) et un réchauffeur (13).
